Europäisches Patentamt

European Patent Office

Office européen des brevets

(19)

(11) Publication number: **0 087 284**
**A1**

(12) # EUROPEAN PATENT APPLICATION

(21) Application number: **83300840.2**

(22) Date of filing: **18.02.83**

(51) Int. Cl.³: **G 06 F 15/20**
**H 04 N 1/41, H 04 N 7/13**

(30) Priority: **19.02.82 GB 8204910**

(43) Date of publication of application:
**31.08.83 Bulletin 83/35**

(84) Designated Contracting States:
**DE FR IT**

(71) Applicant: **The General Electric Company, p.l.c.**
**1 Stanhope Gate**
**London W1A 1EH(GB)**

(72) Inventor: **Collins, Peter Victor**
**58 Fortune Green Road**
**London, NW6(GB)**

(72) Inventor: **Mason, John Robertson Morton**
**8 Greens Court East Lane**
**Wembley Middlesex(GB)**

(74) Representative: **Dolwin, John Davison**
**Central Patent Department The General Electric**
**Company plc Hirst Research Centre East Lane**
**Wembley Middlesex HA9 7PP(GB)**

(54) **Image storage and transmission systems.**

(57) To reduce the quantity of data stored to define visual images electrical signals defining the images are digitised and analysed on a pixel-by-pixel basis to determined boundaries between zones having differing textures and the textures within the zones. Only data defining the zone boundaries and zone textures needs to be stored thus allowing a larger number of visual images to be held in a store than would be possible if full TV data were to be used. An image reconstitutor capable of synthesising signals defining an approximate replica of the original visual image from the data defining the zone boundaries and textures is disclosed. By linking the analysis apparatus and synthesising apparatus using a transmission line an image transmission system is provided.

Fig.1.

EP 0 087 284 A1

The present invention relates to image storage and transmission systems and more particularly, but not exclusively, to such systems involving digital analysis of an image for storage or transmission.

Colour television transmission techniques involve transmitting signals defining a high resolution monochrome picture and relatively low resolution colour infill. This technique is adopted to reduce the bandwidth required for transmission. Thus whilst the basic monochrome picture on a television receiver has good resolution, the colour is provided on a broader basis.

Most people find such pictures acceptable because the human brain adjusts the "approximation" to what it considers reasonable in comparison with previously observed real images. In other words we see the image we think we should see not necessarily what we have actually seen.

It is possible to take the approximate image further from the true image.

It is one object of the present invention to provide a method of, and apparatus for, storing and transmitting visual information using approximation techniques to reduce the quantity of data required to define original visual images.

For the avoidance of doubt, the term "pixel" as used herein means one picture element. For example a picture or visual image which is scanned over say, 2,000 lines in a vertical direction and having 2,000 points in each scan line in a horizontal direction has 4,000,000 pixels, each pixel being definable by one X co-ordinate and one Y co-ordinate.

According to one aspect of the present invention an image transmission system comprises an analogue to digital converter for converting electrical signals defining a visual image to digital form, a first frame store in which digital data defining the original visual image on a pixel-by-pixel basis is stored, analysing means which determine from the data held in the frame store first data defining each boundary between zones of differing texture and second data which determine the texture within each of the zones, a transmission link, means to transmit electrical signals defining in digital from the first and second data, synthesis means to determine from the first and second data data defining an approximate replica of the original visual image, a second frame store in which the data from the synthesising means is stored and a digital to analogue converter responsive to signals supplied by the second frame store to provide an analogue output signal capable of use to provide a visual image.

According to another aspect of the present invention an image storage system comprises an analogue to digital converter for converting electrical signals defining a visual image to digital form, a frame store in which digital data is stored which data defines the original visual image on a pixel-by-pixel basis, analysing means which determine from the data in the frame store first data defining each boundary between zones of differing texture and which determine second data defining the texture within each of the zones, and a store in which the first data and the second data are stored, the first data and the second data being capable of use to reconstitute an approximate replica of the original visual image.

Preferably the analysing means is microprocessor controlled.

According to a further aspect of the present invention apparatus for reconstituting an approximate replica of an original visual image from first and second data derived as specified in the preceding paragraphs comprises synthesising means to determine from the first data defining boundaries between zones of differing texture and from the second data defining the texture within each of the zones digital data defining a visual image on a pixel-by-pixel basis, a frame store for storing said digital data, and a digital to analogue converter responsive to signals supplied by the frame store to provide an analogue output signal capable of use to provide a visual image.

Preferably the synthesising means is a microprocessor which may also be used in an image storage system in accordance with the invention.

The analogue output signal may be provided to a raster type display, for example a cathode ray tube or may be provided to graphics printing apparatus.

An image storage and transmission system in accordance with the invention will now be described with reference to the accompanying drawings of which:-

Figure 1 is a block diagram of an image receiving and storage terminal for use in a system in accordance with the invention,

Figure 2 is a block diagram of an image synthesis terminal for use in a system in accordance with the invention,

Figure 3 is a schematic diagram showing the algorithm used by image analysis means of Figure 1 and resynthesis means of Figure 2,

Figures 4 to 8 and 8A are computer generated diagrams of various patterns used in the explanation of texture, and

Figures 9 to 12 are flow diagrams of a texture analysis programme.

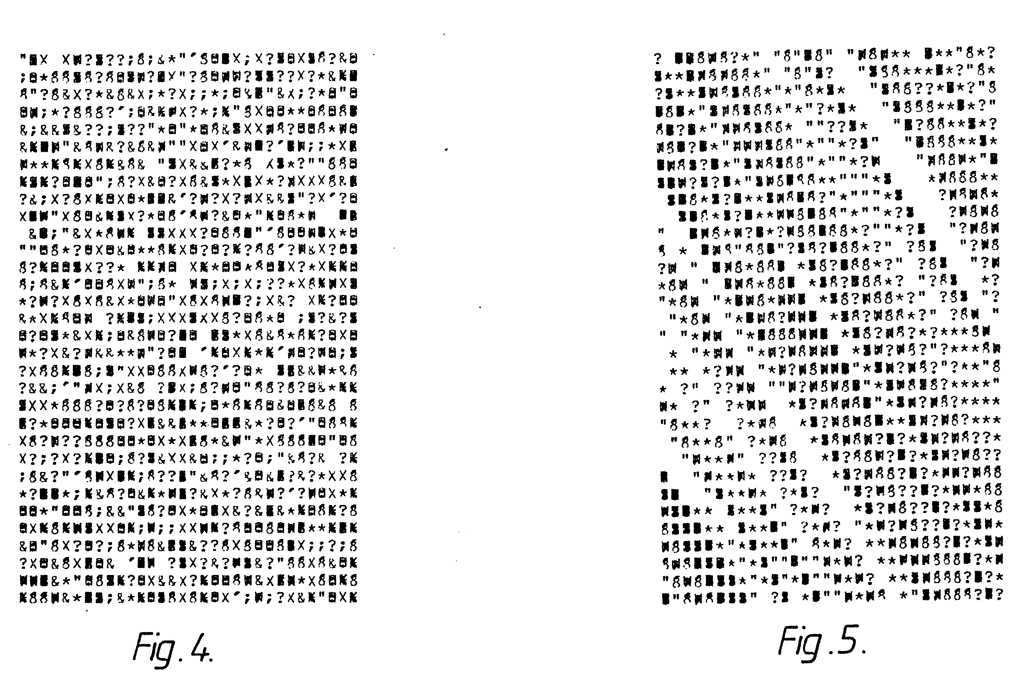

In order to fully understand the invention it is necessary that the term 'texture' be understood.    In the present invention a number of textures are identified electronically and examples of some of these textures are shown in Figures 4 to 8. We shall first discuss monochrome pictures for example black and white pictures having a number of intermediate grey levels.

Referring first to Figure 4 an enlarged computer simulated diagram of 'random' texture is shown. A matrix of thirty-two by thirty-two pixels is shown and the picture from which the example is generated has sixteen grey levels. The sixteen levels are respectively represented by sixteen different symbols ranging from a blank space (white) to a solid (black). Random texture is the simplest texture which may be defined by data since it has only two parameters these being the mean value of the grey level and variance of the grey level distribution.

Turning now to Figure 5 an example of 'markov' texture having eight grey levels is shown. Markov texture may be seen to be a texture in which similar values of grey level form substantially contiguous lines of pixels in a definable direction. The direction may be defined by an angle or by specifying a vector. The vector for the markov texture of Figure 5 is $(1,1)$. A markov texture may have any directional vector arrangement, including horizontal and vertical vectors. The other parameters of a markov texture may be defined by a probability transition matrix $P = (P_{ij})$ in which $P_{ij} = pr \; F(x+a_x, \; y+ay) = j \; / \; F(x,y) = i$ , $P$ is an $N_G$ by $N_G$ matrix, where $N_G$ is the number of grey levels, and

$$N_G$$
$$\sum_{j=1} P_{ij} = 1 \text{ for } 1 \leqslant i \leqslant N_G$$

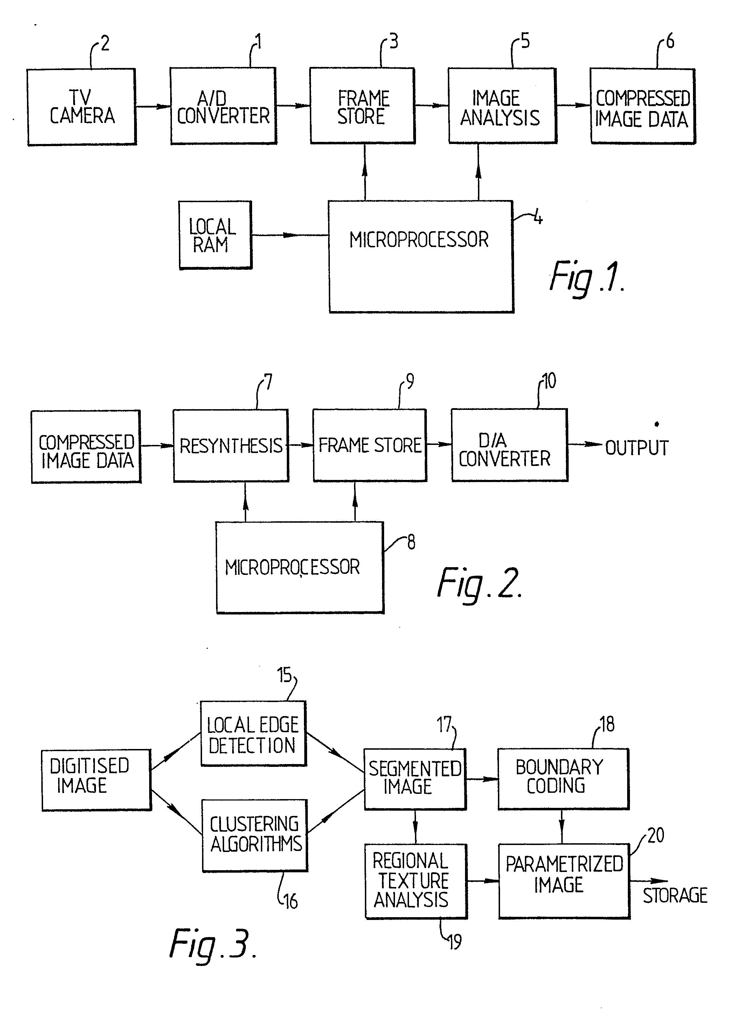

For the example of Figure 3 which has eight grey levels the probability matrix is given as:

$$\begin{pmatrix}
.8 & .1 & .1 & & & & & \\
.1 & .8 & .1 & & & & & \\
& .1 & .8 & .1 & & & & \\
& & .1 & .8 & .1 & & & \\
& & & .1 & .8 & .1 & & \\
& & & & .1 & .8 & .1 & \\
& & & & & .1 & .8 & .1 \\
& & & & & & .1 & .1 & .8
\end{pmatrix}$$

Thus for markov textures data defining the vector co-ordinates and characteristics of the probability matrix are stored or transmitted.

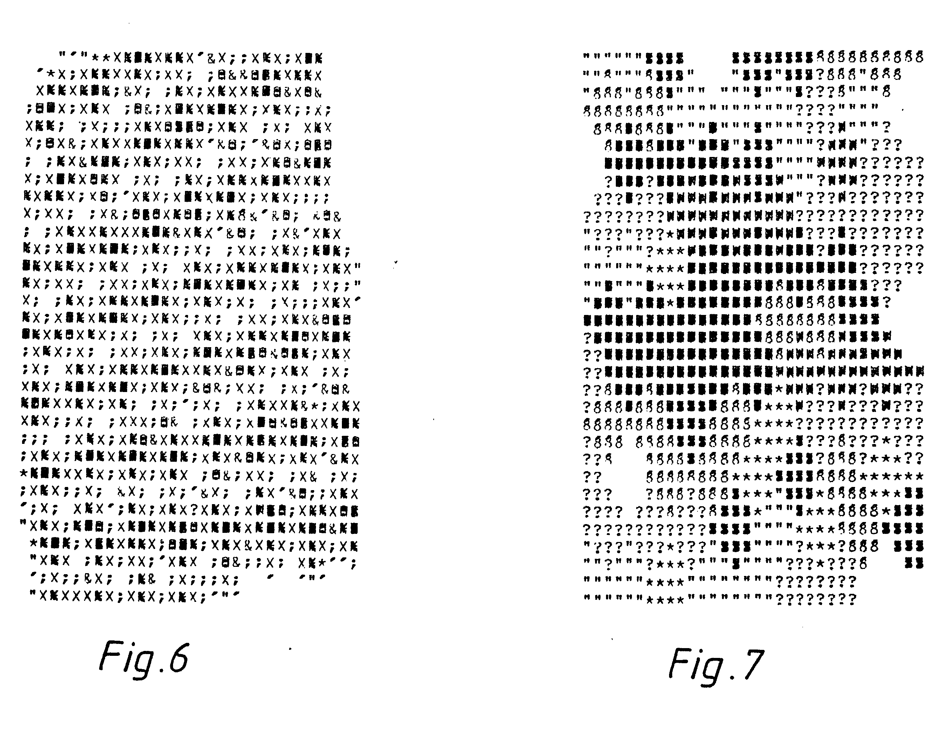

A third kind of texture model is shown in Figure 6 to which reference is now made. This kind of texture referred to as tesselated texture comprises grey level patterns which are repeated in substantially rectangular groups through the complete texture zone. It will be appreciated that the rectangular grouping may be in directions other than with the sides of the rectangle in a vertical or horizontal plane.

A development of tesselated texture referred to herein as placement texture (not shown) is based on subpatterns which are not necessarily rectangular in shape but which are repeated across the texture zone in a determinable manner. Positioning of the subpatterns may be achieved by specifying the centre of each subpattern in the zone.

Figure 7 shows a particular form of placement texture which is referred to as crystalline texture. The crystal structure is clearly visible in the figure. Data stored or transmitted for crystalline texture may define the pixel at the centre of each crystal and a probability distribution for the respective grey levels within each "crystal".

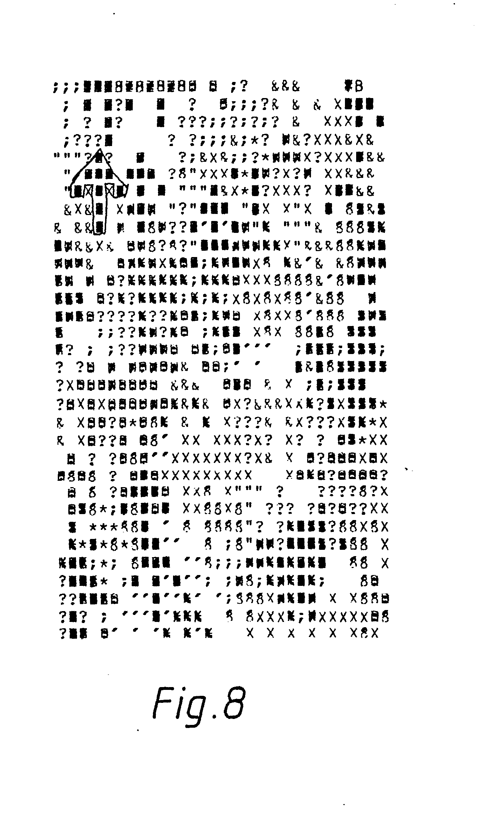

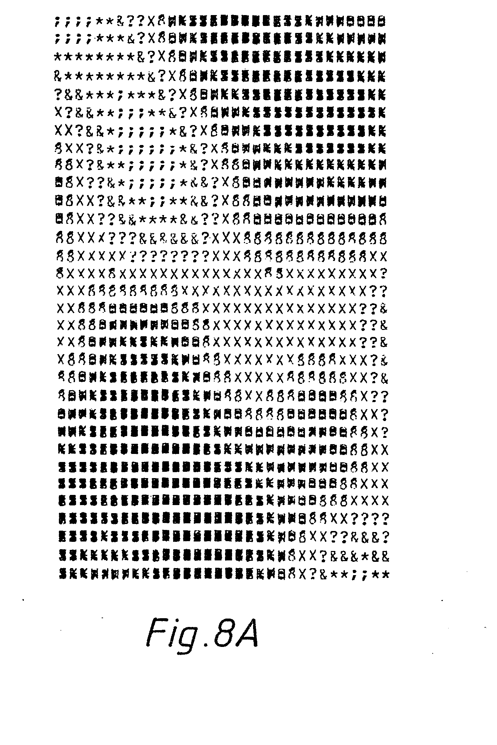

Referring now to Figure 8 a further texture referred to as a bombed texture is shown. A crater "template" is delineated in the top left of the simulation. A random texture background is defined together with the crater template. The probability of a "crater" appearing with the head at any particular pixel may be calculated and the grey level infill of each "crater" may be determined in accordance with a probability distribution.

A seventh type of texture referred to as 'correlated' texture is shown in Figure 8A to which reference is now made. Data required to define any particular correlated texture comprises the correlation length (a) and a constant (c). The textures have an autocorrelation of c. exp $\dfrac{-r^{-2}}{a^2}$ where $\underline{r}$ is a position vector.

It will be appreciated that the textures similated in Figures 4 to 8A are very much enlarged with each pixel being represented by a typescript character or space. It will also be realised that many other texture patterns may be determined. It is believed that the seven specific textures referred to herein respectively as "random", "markov", "tessellated", "placement", "crystalline", "bombed" and "correlated" textures are sufficient for understanding of the invention.

Referring now to Figure 1, the image storing and transmitting apparatus comprises an analogue to digital converter 1 which digitises electrical signals received from for example a raster scanning device such as a television camera 2. The digitised signal from one complete scan of the television camera 2 is passed to a frame store 3 which may be a random-access-memory (RAM) where it is stored in a logical order for analysis. In the case of a monochrome image having sixteen grey levels, four data bits will define the grey level of each pixel and the location of the data within the frame store 3 will define the 'x' and 'y' co-ordinates of the pixel.

The image may now be analysed by image analysis circuitry 5 (the operation of which is explained hereinafter) under the control of a microprocessor 4 to provide image data at an output 6 to be transmitted to a transmission line or radio link (not shown) or for storage in a store (not shown) for example a magnetic disc or magnetic tape store.

Referring now to Figure 2 the image synthesis apparatus comprises resynthesising circuitry 7 (the operation of which is explained hereinafter) which is arranged to reconstruct a digitised image from data held in the store (not shown) of Figure 1 or which has been transmitted over the transmission line. The resynthesising circuitry 7 operates under the control of a microprocessor 8 which in the case of a storage system or in a combined transmitter/receiver may be the microprocessor 4.

The digitised image is passed to a frame store 9 which provides data (in similar form to that input to the frame store 3) to a digital to analogue converter 10. The output of the digital to analogue converter 10 is passed to a raster scanning device for example a television screen (not shown) or a graphics printer (not shown).

Referring to Figure 3 the image analysis circuitry 5 of Figure 1 functions in broad outline in the following manner:-

The digitised image held in the frame store 3 is examined to determine the boundaries between each zone of differing texture (15) and to combine zones of similar texture (16) to provide data characterising each of the boundaries (17) in a segmented image. The data defining the segmented image is processed to provide boundary coding (18) whilst each zone within the segmented image is examined (19) to determine the texture within the zone.

The texture data and boundary coding data are combined (20) for storage or transmission as a parameterised image.

It is first necessary to consider local edge detection (15). The frame held in the frame store is divided into zones bounded by edges where 'discontinuities' occur. A discontinuity is defined as a significant change in a parameter of the image. Two principle parameters are considered these being the mean value of the grey levels of the image and the variance of the grey levels. Local edge detection (15) is carried out by comparing each pixel with its neighbours in scanning for possible edge points within the frame.

Considering a pixel and its eight adjacent pixels gives a three pixel by three pixel window to which a set of masks is applied to produce a set of gradient functions.

If the discrete image array is defined by $F(j,k)$ and the set of marks is a set of linear operators $Hi(j,k)$ a set of gradient functions $Gi(j,k)$ is produced and $Gi(j,k) = F(j,k) \otimes Hi(j,k)$.

Combining the set of Gi by a linear or non-linear operation gives an enhanced image array $A(j,k) = \Theta\{Gi(j,k)\}$

The array $A(j,k)$ is applied to a threshold t (the value of which is determined in accordance with the sensitivity required) to provide a set of edge point positions $(j,k)$ at which $A(j,k) \geqslant t$.

The set of edge point positions $(j,k)$ are further processed to ensure a continuous boundary and may be operated on to reduce each boundary to a single pixel width. The clustering algorithms (16) commence by dividing the frame into two pixel by two pixel groups. For each group the mean value of grey level is calculated and the variance between the grey level. The two values of mean and variance of adjacent groups are threshold compared with each other to determine whether the two groups are statistically of the same type. If the two groups are found to have similar properties they are combined as a single large group and compared with another adjacent two pixel by two pixel group. This process continues until a difference between the large group and an adjacent group is determined at which point a new large group is started. It will be appreciated that the basic group used in the clustering algorithms may be any 'n' pixel by 'm' pixel size (where 'n' and 'm' are integers). The statistics used in comparisons between adjacent groups may be other than the mean and variance of the grey level.

The local edge detection points (j,k) and the boundary points of each large group are now combined to provide a series of edges for boundary encoding.

Boundary coding 18 uses a chain code to provide data defining each boundary established by local edge detection and clustering. From each pixel it is only possible for a boundary line to move in one of eight directions to an adjacent pixel. The 'x' and 'y' co-ordinates of a start/finish pixel for each boundary are specified. From the start/finish pixel a direction is specified in three-bit binary coding to specify the second pixel on the boundary. The third pixel of the boundary si specified in three bit binary coding in terms of its direction from the second pixel of the boundary and so on for each subsequent pixel of the boundary until the boundary is fully defined.

If a further reduction in data for storage or transmission is required zone boundaries may be defined in terms of only four directions from each pixel, say, horizontal (east, west) and vertical (north, south). This method requires only two bits for each pixel on a boundary.

As an alternative to reducing the data stored or transmitted by the three bit code, or for further data reduction when using the two bit code, and particularly if the boundaries include a direct line of pixels, it is possible to encode the boundaries in terms of start point pixel x and y co-ordinates and successive turning point pixel x and y co-ordinates. Alternatively the start point pixel x and y co-ordinates may be specified, followed by a two bit or three bit direction code and a run length code defining the number of pixels before a turning point is reached. Subsequent data need only specify a direction and length for each successive turning point of the boundary.

Having thus defined the boundaries of the image it is necessary to define the texture within each zone. The method used to determine the texture within each zone is referred to as a spatial grey level dependence method. This method involves computing the probability of two pixels at a given separation having respective grey levels of i and j where i and j are in the range zero to $N_G$ - the number of grey levels.

A spatial grey level dependence matrix (SGLDM) in a direction '$\theta$' and distance 'r' is an $N_G$ by $N_G$ matrix of the form $S(\theta, r) = (S_{ij})$

$$S_{ij} = pr\left\{(x,y) \mid f(x,y) = i \text{ and } f(x+r\cos\theta, y+r\sin\theta) = j\right\}$$

or, put in vector form which is more useful in a discrete array, the SGLDM for vector $\underline{a} = (a_x, a_y)$ $S(\underline{a})$ is given by

$$S_{ij} = pr\left\{(x,y) \mid f(x,y) = i \text{ and } f(x+a_x, y+a_y) = j\right\}$$

The matrices employed in this analysis are $S(\underline{a})$, where $\underline{a} = (1,0), (0,1), (1,1)$ and $(1,-1)$.

The features of the matrices used in the texture analysis are commonly found in the literature and are the following:

$$u_x = \sum_{i=1}^{N_G} i \sum_{j=1}^{N_G} S_{ij}, \text{ the row-sum mean;}$$

$$u_y = \sum_{j=1}^{N_G} j \sum_{i=1}^{N_G} S_{ij}, \text{ the column sum mean;}$$

$$\sigma_x^2 = \sum_{i=1}^{N_G} (i-u_x) \sum_{j=1}^{N_G} S_{ij}, \text{ the row sum variance;}$$

$$\sigma_y^2 = \sum_{j=1}^{N_G} (j-u_y) \sum_{i=1}^{N_G} S_{ij}, \text{ the column sum variance;}$$

$$E(S(\underline{a})) = \sum_{i=1}^{N_G} \sum_{j=1}^{N_G} (S_{ij})^2, \text{ the Energy;}$$

$$H(S(\underline{a})) = -\sum_{i=1}^{N_G} \sum_{j=1}^{N_G} S_{ij} \log(S_{ij}), \text{ the Entropy;}$$

$$C(S(\underline{a})) = \sum_{i=1}^{N_G} \sum_{j=1}^{N_G} \frac{(i-u_x)(j-u_y) S_{ij}}{\sigma_x \quad \sigma_y}, \text{ the correlation;}$$

$$L(S(\underline{a})) = \sum_{i=1}^{N_G} \sum_{j=1}^{N_G} \frac{1}{1+(i-j)^2} S_{ij}, \text{ the local Homogeneity;}$$

$$I(S(\underline{a})) = \sum_{i=1}^{N_G} \sum_{j=1}^{N_G} (i - j)^2 \, S_{ij}, \text{ the Inertia.}$$

The energy of a matrix, $E(S)$ is a measure of the diversity of its entries. Its minimum value occurs when all entries are equal, its maximum where there is just one non-zero value (which in this case must be 1, for the $S(\underline{a})$ are probability matrices) – Thus,

$$1 \geqslant E(S(\underline{a})) \geqslant 1/N_G$$

The entropy of a matrix is a measure of the similarity of its entries. It gives a maximum when the values are all the same, and a minimum when only one is non-zero. Thus,

$$\log(N_G^2) \geqslant H(S(\underline{a})) \geqslant 0$$

The correlation of a matrix measures the skewness of the entries of the matrix, a diagonal (left to right or right to left) matrix has a large absolute correlation, and a matrix of uniform entries has a low correlation. In fact,

$$-1 \leqslant C(S(\underline{a})) \leqslant 1.$$

The Local Homogeneity of a matrix is a measure of the uniformity on a local level and is maximum when the matrix is diagonal.

The Inertia measures the diversity of grey levels at a local level and is a measure of the variance of the diagonal sums of the matrix not correct for the mean.

These four SGLDM's and their features are very useful in analysing texture. However, they only analyse on a local level (in fact they just look at immediate pixel neighbours). Therefore it is necessary to use some level of global analysis. This is employed in the form of an autocorrelation function.

The normalised autocorrelation function of order p,q of the grey-level array $\{f(x,y) \mid 1 \leqslant x \leqslant IX, 1 \leqslant y \leqslant IY$ is defined by the p x q matrix

$$A(i,j) = \frac{\displaystyle\sum_{1 \leqslant x, x+i \leqslant IX} \sum_{1 \leqslant y, y+j \leqslant IY} f(x,y)\, f(x+i,\, y+j)}{\displaystyle\sum_{1 \leqslant x, x+i \leqslant IX} \sum_{1 \leqslant y, y+j \leqslant IY} \left[ f(x,y) \right]^2} \qquad \text{for} \quad |i| \leqslant p, \quad |j| \leqslant q$$

Thus, if $f(x,y) = c$ for all $1 \leqslant x \leqslant IX$ $1 \leqslant y \leqslant IY$ then A)i,j) = 1 for $|i| \leqslant p$, $|j| \leqslant q$.

The autocorrelation function is taken over a square window whose centre is at (0,0) thus $-p = -q \leqslant i,\ j \leqslant p = q$. If entry $A(i,j)$ is high then the correlation between all points $(x,y)$ and their translates $(x + i,\ y + j)$ is, on average, high thus $A(i,j)$ high $\Rightarrow C(S(\underline{a}))$ high, where $\underline{a} = (i,j)$.

Although the normalised autocorrelation function is not strictly symmetrical rotationally, its 'structure' is; that is, although the values $A(i,j)$, $A(-i,-j)$ are not exactly equal for all i and j, the trends in value are similar.

In order to make a decision as to the type of model that the texture array in question most nearly fits, several values are computed from the four main SGLDM's:

NCOR – The number of SIGDMs with correlation $> 0.1$

NIC  – The number of SGLDMs with correlation $> 0.75$

NID  – The number of SGLDMs with $0.25 < \text{correlation} < 0.75$

NTIA – The number of SGLDMs with Inertia $< 2.0$

NHOM – The number of SGLDMs with local Homogeneity $>$ correlation

The type of texture having a high value of NCOR, NIC and NID is mainly the correlated texture, which should have high correlation in all directions. Markov texture should have high correlation in just one direction which may or may not be in one of the four main directions and Random texture has negligible correlation in all directions. Bombed and Crystalline textures will have a reasonably high correlation in all directions, but the values will not be greater than about 0.75 because of abrupt grey-level changes present.

Inertia is likely to be high for structural models (random, markov and similar textures) but small for statistical models (tesselated, placement, crystalline and bombed textures) because it measures the amount of entries off the main diagonal. Thus, a large value of NITA indicates a fairly high probability that the model is statistical.

NHOM is a useful quantity for discriminating between structural models: Textures like Bombing models and the Crystalline models have subpatterns of a uniform grey-level and thus will have high local homogeneities, higher in fact than their correlation, so a large value of NHOM will tend to imply that the model is a bombed or crystalline texture.

These quantities together with 'percent' - the minimum percentage of non-zero entries in the matrix and 'Diff', the absolute difference between actual and theoretical grey level distributions forms the basis of the discrimination procedure.

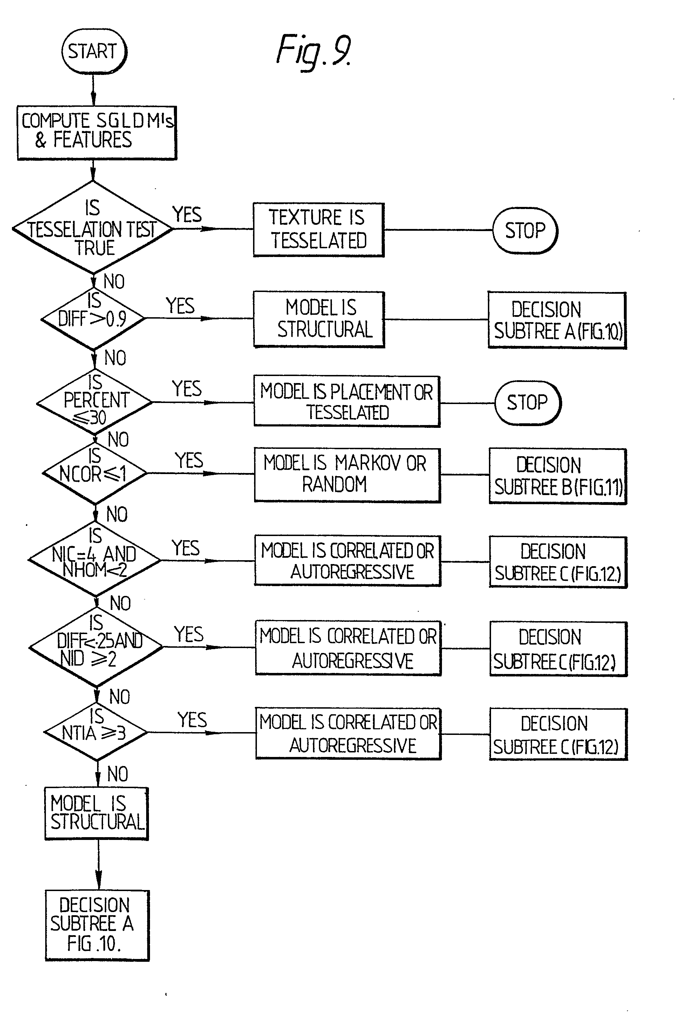

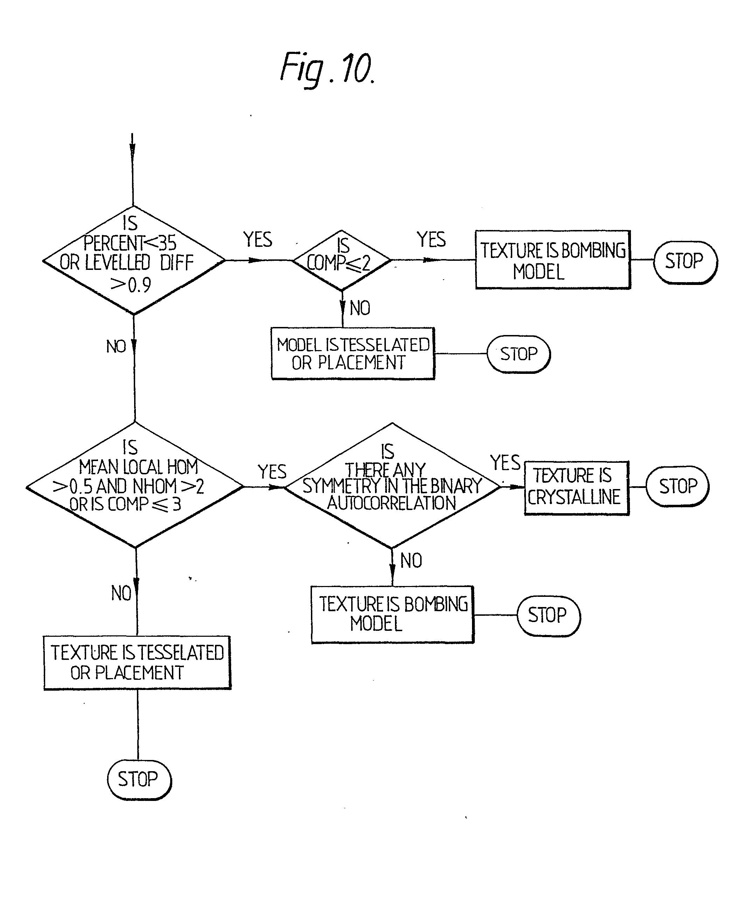

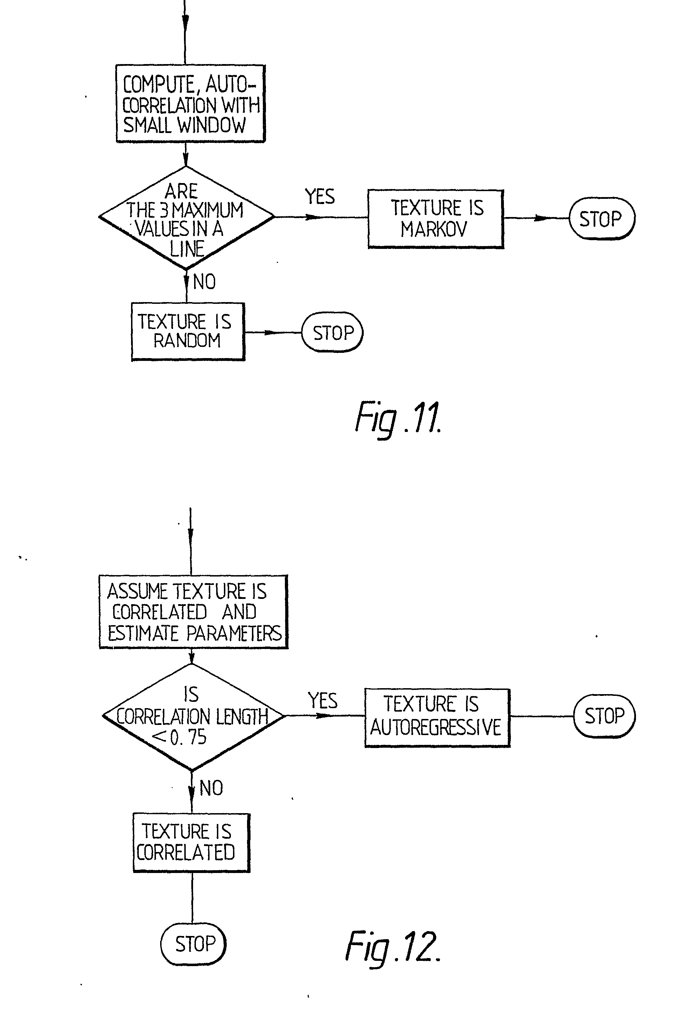

A flow chart showing an analysis based on the features of the SGLDM's is shown in Figures 9 to 12. The flow chart is self-explanatory.

The resynthesis of an image from the data provided is a reversal of the process described. The texture zones may be reconstructed from the boundary coded data and infilled with an appropriate texture based on data determining the texture type and the parameters supplied for the texture in the particular zone.

0087284

-16-

Claims

1.      An image transmission system comprising an analogue to digital converter for converting electrical signals defining a visual image to digital form, a first frame store in which digital data defining the original visual image on a pixel-by-pixel basis is stored, analysing means which determine from the data held in the frame store first data defining each boundary between zones of differing texture and second data which determine the texture within each of the zones, a transmission link, means to transmit electrical signals defining in digital from the first and second data, synthesis means to determine from the first and second data data defining an approximate replica of the original visual image, a second frame store in which the data from the synthesising means is stored and a digital to analogue converter responsive to signals supplied by the second frame store to provide an analogue output signal capable of use to provide a visual image.

2.      An image transmission system as claimed in Claim 1 in which the analysing means is a suitably programmed microprocessor.

3.      An image transmission system as claimed in Claim 1 in which the synthesising means is a suitably programmed microprocessor.

4.      An image storage system comprising an analogue to digital converter for converting electrical signals defining a visual image to digital form, a frame store in which digital data is stored which data defines the original visual image on a pixel-by-pixel basis, analysing means which determine from the data in the frame store first data defining each boundary between zones of differing texture and which determine second data defining the texture within each of the zones, and a store in which the first data and the second data are stored, the first data and the second data being capable of use to reconstitute an approximate replica of the original visual image.

5. An image storage system as claimed in Claim 4 in which the analysing means is a suitably programmed microprocessor.

6. Apparatus for reconstituting an approximate replica of an original visual image from first and second data derived as specified in Claim 4 comprising synthesising means to determine from the first data defining boundaries between zones of differing texture and from the second data defining the texture within each of the zones digital data defining a visual image on a pixel-by-pixel basis, a frame store for storing said digital data, and a digital to analogue converter responsive to signals supplied by the frame store to provide an analogue output signal capable of use to provide a visual image.

7. Apparatus for reconstituting an approximate replica of an original visual image as claimed in Claim 6 in which the synthesising means is a suitably programmed microprocessor.

8. Apparatus for reconstituting an approximate replica of an original visual image as claimed in Claim 6 or Claim 7 including raster-scanned display means to which said analogue output signal is provided.

Fig.1.

Fig.2.

Fig.3.

0087284

Fig. 5.

Fig. 4.

Fig.6

Fig.7

0087284

Fig.8

Fig.8A

## Fig.9.

```
            ( START )
                │
                ▼
        ┌──────────────────┐
        │ COMPUTE SGLD M's │
        │   & FEATURES     │
        └──────────────────┘
                │
                ▼
           ╱──────────╲          YES     ┌──────────────┐
          ╱     IS      ╲ ─────────────▶ │  TEXTURE IS  │ ────▶ ( STOP )
          ╲ TESSELATION ╱                │  TESSELATED  │
          ╲ TEST TRUE  ╱                 └──────────────┘
           ╲──────────╱
                │ NO
                ▼
           ╱──────────╲          YES     ┌──────────────┐      ┌─────────────────────┐
          ╱    IS      ╲ ─────────────▶  │   MODEL IS   │ ───▶ │     DECISION        │
          ╲ DIFF > 0.9 ╱                 │  STRUCTURAL  │      │ SUBTREE A (FIG.10)  │
           ╲──────────╱                  └──────────────┘      └─────────────────────┘
                │ NO
                ▼
           ╱──────────╲          YES     ┌────────────────────┐
          ╱    IS      ╲ ─────────────▶  │ MODEL IS PLACEMENT │ ────▶ ( STOP )
          ╲  PERCENT   ╱                 │   OR TESSELATED    │
          ╲   ≤ 30     ╱                 └────────────────────┘
           ╲──────────╱
                │ NO
                ▼
           ╱──────────╲          YES     ┌──────────────────┐    ┌─────────────────────┐
          ╱    IS      ╲ ─────────────▶  │ MODEL IS MARKOV  │ ──▶│     DECISION        │
          ╲ NCOR ≤ 1   ╱                 │   OR RANDOM      │    │ SUBTREE B (FIG.11)  │
           ╲──────────╱                  └──────────────────┘    └─────────────────────┘
                │ NO
                ▼
           ╱──────────╲          YES     ┌─────────────────────┐   ┌─────────────────────┐
          ╱    IS      ╲ ─────────────▶  │ MODEL IS CORRELATED │ ─▶│     DECISION        │
          ╲ NIC=4 AND  ╱                 │  OR AUTOREGRESSIVE  │   │ SUBTREE C (FIG.12)  │
          ╲ NHOM < 2   ╱                 └─────────────────────┘   └─────────────────────┘
           ╲──────────╱
                │ NO
                ▼
           ╱──────────╲          YES     ┌─────────────────────┐   ┌─────────────────────┐
          ╱    IS      ╲ ─────────────▶  │ MODEL IS CORRELATED │ ─▶│     DECISION        │
          ╲ DIFF<.25   ╱                 │  OR AUTOREGRESSIVE  │   │ SUBTREE C (FIG.12)  │
          ╲ AND NID≥2  ╱                 └─────────────────────┘   └─────────────────────┘
           ╲──────────╱
                │ NO
                ▼
           ╱──────────╲          YES     ┌─────────────────────┐   ┌─────────────────────┐
          ╱    IS      ╲ ─────────────▶  │ MODEL IS CORRELATED │ ─▶│     DECISION        │
          ╲ NTIA ≥ 3   ╱                 │  OR AUTOREGRESSIVE  │   │ SUBTREE C (FIG.12)  │
           ╲──────────╱                  └─────────────────────┘   └─────────────────────┘
                │ NO
                ▼
        ┌──────────────┐
        │   MODEL IS   │
        │  STRUCTURAL  │
        └──────────────┘
                │
                ▼
        ┌──────────────┐
        │   DECISION   │
        │  SUBTREE A   │
        │   FIG.10.    │
        └──────────────┘
```

7/8

# Fig.10.

COMPUTE, AUTO-
CORRELATION WITH
SMALL WINDOW

ARE
THE 3 MAXIMUM
VALUES IN A
LINE

YES → TEXTURE IS
MARKOV → STOP

NO

TEXTURE IS
RANDOM → STOP

*Fig .11.*

ASSUME TEXTURE IS
CORRELATED AND
ESTIMATE PARAMETERS

IS
CORRELATION LENGTH
< 0.75

YES → TEXTURE IS
AUTOREGRESSIVE → STOP

NO

TEXTURE IS
CORRELATED

STOP

*Fig .12.*

## EUROPEAN SEARCH REPORT

European Patent Office

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 720 780 (REMY) <br> * Column 1, line 58 - column 5, line 9; column 5, line 42 - column 6, line 10 * | 1,4-8 | G 06 F 15/20 <br> H 04 N 1/41 <br> H 04 N 7/13 |
| Y | US-A-4 180 330 . (KOTERA) <br> * Column 3, lines 13-47 * | 4-8 | |
| Y | US-A-4 233 601 (HANKINS) <br> * Column 1, lines 49-59; column 2, line 67 - column 3, line 19; column 5, line 23 - column 6, line 12; column 9, lines 10-39; column 10, lines 8-10 * | 4-8 | |
| Y | EP-A-0 009 345 (NATIONAL BIOMEDICAL RESEARCH FOUNDATION) <br> * Page 1, line 1 - page 3, line 20; page 9, line 1 - page 10, line 20; page 13, line 9 - page 15, line 13; claims * | 1,2,4-8 | **TECHNICAL FIELDS SEARCHED (Int. Cl. ³)** |
| A | COMPUTER GRAPHICS AND IMAGE PROCESSING, vol. 8, no. 3, December 1978, pages 447-463, New York, USA <br> W. CONNERS et al.: "Note/Equal probability quantizing and texture analysis of radiographic images", | | G 06 F 15 <br> H 04 N 1 <br> H 04 N 7 |

--- -/-

The present search report has been drawn up for all claims

| Place of search | Date of completion of the search | Examiner |
|---|---|---|
| THE HAGUE | 01-06-1983 | VERSCHELDEN J. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl. ³) |
|---|---|---|---|
| A | RECONNAISSANCE DES FORMES ET TRAITEMENT DES IMAGES, CONGRES AFCET-IRIA, held at Chatenay-Malabry on 21st-23rd February 1978, pages 897-907, Institut de Recherche d'Information et d'Automatique, Le Chesnay, Paris, FR. * W.K. PRATT: "Quantitative approaches to image feature extraction and segmentation" * Page 903, lines 14-18; page 907, lines 19-23 * | 2 | |
| A | COMPUTER GRAPHICS AND IMAGE PROCESSING, vol. 10, no. 2, 1979, pages 172-182, New York, USA P.C. CHEN et al.: "Segmentation by texture using a co-occurrence matrix and a split- and merge algorithm" * Page 178, line 20 - page 181, line 33 * | 2 | |
| A | PROCEEDINGS ON THE FOURTH INTERNATIONAL JOINT CONFERENCE ON PATTERN RECOGNITION, held on 7th-10th November 1978 at Kyoto, Japan, pages 45-69, IEEE Computer Society, California, USA R.M. HARALICK: "Statistical and structural approaches to texture" | | |

--- -/-

TECHNICAL FIELDS SEARCHED (Int. Cl. ³)

The present search report has been drawn up for all claims

| Place of search | Date of completion of the search | Examiner |
|---|---|---|
| THE HAGUE | 01-06-1983 | VERSCHELDEN J. |

| Category | Citation of document with indication, where appropriate, of relevant passages | Relevant to claim | CLASSIFICATION OF THE APPLICATION (Int. Cl. ³) |
|---|---|---|---|
| A | IEEE TRANSACTIONS ON PATTERN ANALYSIS AND MACHINE INTELLIGENCE, vol. PAM1-3, no. 5, September 1981, pages 540-556, New York, USA M.D. LEVINE: "A modular computer vision system for picture segmentation and interpretation", | | |
| A | PROCEEDINGS ON THE THIRD INTERNATIONAL JOINT CONFERENCE ON PATTERN RECOGNITION, held on 8th-11th November 1976, Coronado, California, pages 494-497, IEEE Computer Society, California, USA M.D. LEVINE et al.: "A method for non-purpose picture segmentation" | 2 | |
| A | PROCEEDINGS OF THE CONFERENCE ON PATTERN RECOGNITION AND IMAGE PROCESSING, held on 6th-8th June 1977, New York, Long Beach, pages 392-398, IEEE Computer Society, New York, USA J.T. TOU et al.: "Picture understanding by machine via textural feature extraction" | | TECHNICAL FIELDS SEARCHED (Int. Cl. ³) |

The present search report has been drawn up for all claims

| Place of search | Date of completion of the search | Examiner |
|---|---|---|
| THE HAGUE | 01-06-1983 | VERSCHELDEN J. |